(19) Europäisches Patentamt
European Patent Office
Office européen des brevets

(11) **EP 2 338 035 B1**

(12) **EUROPÄISCHE PATENTSCHRIFT**

(45) Veröffentlichungstag und Bekanntmachung des Hinweises auf die Patenterteilung:
**22.08.2018 Patentblatt 2018/34**

(21) Anmeldenummer: **09783146.5**

(22) Anmeldetag: **18.09.2009**

(51) Int Cl.:
**G01F 1/60** (2006.01)    G01F 1/58 (2006.01)

(86) Internationale Anmeldenummer:
**PCT/EP2009/062087**

(87) Internationale Veröffentlichungsnummer:
**WO 2010/043467 (22.04.2010 Gazette 2010/16)**

(54) **VERFAHREN ZUM ENERGIESPARENDEN BETREIBEN EINES MAGNETISCH-INDUKTIVEN DURCHFLUSSMESSGERÄTES**

METHOD FOR THE ENERGY-SAVING OPERATION OF A MAGNETIC-INDUCTIVE FLOW METER

PROCÉDÉ PERMETTANT DE FAIRE FONCTIONNER AVEC ÉCONOMIE D'ÉNERGIE UN APPAREIL DÉBITMÉTRIQUE À INDUCTION MAGNÉTIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **13.10.2008 DE 102008051034**

(43) Veröffentlichungstag der Anmeldung:
**29.06.2011 Patentblatt 2011/26**

(73) Patentinhaber: **Endress+Hauser Flowtec AG
4153 Reinach (CH)**

(72) Erfinder: **RÜFENACHT, Markus
CH-4143 Dornach (CH)**

(74) Vertreter: **Andres, Angelika Maria
Endress+Hauser (Deutschland) AG+Co. KG
PatServe
Colmarer Strasse 6
79576 Weil am Rhein (DE)**

(56) Entgegenhaltungen:
**EP-A2- 1 079 212    JP-A- 6 341 874
JP-A- 7 306 069    JP-A- S58 135 915
US-A- 4 766 770**

**Beschreibung**

Die Erfindung bezieht sich auf ein Verfahren zum Betreiben eines magnetisch-induktiven Durchflussmessgerätes mit einem Messrohr,

Magnetisch-induktive Durchflussmessgeräte nutzen für die volumetrische Strömungsmessung das Prinzip der elektrodynamischen Induktion aus: Senkrecht zu einem Magnetfeld bewegte Ladungsträger des Mediums induzieren im gleichfalls im Wesentlichen senkrecht zur Durchflussrichtung des Mediums und senkrecht zur Richtung des Magnetfeldes angeordneten Elektroden eine Spannung. Die in den Elektroden induzierte Messspannung ist proportional zu der über den Querschnitt des Messrohres gemittelten Strömungsgeschwindigkeit des Mediums und somit zum Volumenstrom. Ist die Dichte des Mediums bekannt, lässt sich der Massestrom in der Rohrleitung bzw. dem Messrohr bestimmen. Die Messspannung wird üblicherweise über das Elektrodenpaar abgegriffen, das in dem Bereich des Messrohres angeordnet ist, in dem die maximale Magnetfeldstärke und folglich die maximale Messspannung zu erwarten ist. Die Elektroden sind üblicherweise galvanisch mit dem Medium gekoppelt; es sind jedoch auch magnetisch-induktive Durchflussmessgeräte mit berührungslos kapazitiv koppelnden Elektroden bekannt.

Das Messrohr kann entweder aus einem elektrisch leitfähigen Material, z.B. Edelstahl, gefertigt sein, oder aus einem elektrisch isolierenden Material bestehen. Ist das Messrohr aus einem elektrisch leitfähigen Material gefertigt, so muss es in dem mit dem Medium in Kontakt kommenden Bereich mit einem Liner aus einem elektrisch isolierenden Material ausgekleidet sein. Der Liner besteht je nach Temperatur und Medium beispielsweise aus einem thermoplastischen, einem duroplastischen oder einem elastomeren Kunststoff. Es sind jedoch auch magnetisch-induktive Durchflussmessgeräte mit einer keramischen Auskleidung bekannt.

Steht keine Spannungsversorgung zur Verfügung, werden Feldgeräte oftmals batteriebetrieben. Dies ermöglicht einen autarken Einsatz der entsprechenden Feldgeräte, insbesondere magnetisch-induktive Durchflussmessgeräte können auf diese Weise, wartungsfrei über mehrere Jahre betrieben werden.

Bei der Verwendung von mediumsberührenden Messelektroden bilden sich an der Grenzfläche zwischen der metallischen Messelektrode und dem durch das Messrohr fließenden Medium galvanische Elemente, die ein elektrochemisches Störpotential verursachen. Dieses elektrochemische Störpotential ist veränderlich und abhängig von verschiedenen sich ändernden Umgebungsbedingungen wie Temperatur, Druck, Zusammensetzung des Mediums, Material der Messelektroden und Material des Messrohrs. So kann sich beispielsweise die Zusammensetzung der Oberfläche der Messelektroden infolge der Bildung einer Passivierungsschicht oder infolge von Korrosion ändern. Das variierende elektrochemische Störpotential überlagert die eigentliche Messspannung, welche proportional zur Strömungsgeschwindigkeit des durch das Messrohr fließenden Mediums ist. Es versteht sich von selbst, dass ein sich über die Zeit änderndes elektrochemisches Potential die Messgenauigkeit eines herkömmlichen magnetisch-induktiven Durchflussmessgeräts negativ beeinflusst. Es sind deshalb Verfahren bekannt geworden, die diese Störsignale eliminieren. Besonders kritisch ist es, wenn es sich bei dem zu messenden Medium um ein Medium mit einer geringen Leitfähigkeit handelt, das das Messrohr mit einer relativ hohen Strömungsgeschwindigkeit durchfließt. Aufgrund des Einflusses der relativ großen Störspannung auf die Messspannung besteht dann die Gefahr, dass die Messspannung im Rauschen verschwindet, wodurch eine zuverlässige und wiederholbare Durchflussmessung unmöglich wird. JP S58 135915 A offenbart ein Verfahren zum Betreiben eines magnetisch-induktiven Durchflussmessgerätes, wobei in dem Fall, dass die Spulenanordnung frei von dem Erregerstrom ist, eine elektrische Potentialdifferenz zwischen dem Messstoff gegenüber einem Referenzpotential abgegriffen wird, und wobei die Potentialdifferenz mit einem vorgegebenen Referenzwert verglichen wird, um ein Störpotential heraus zu finden. Die Durchflussproportionale Messspannung an den Elektroden beträgt wenige mV, evt. nur wenige μV bei sehr niedrigem Durchfluss. Die dem Durchfluss proportionale Messspannung wird wie bereits erwähnt überlagert von elektrochemischen Störspannungen, die an der Grenzschicht zwischen Elektrode und Flüssigkeit einstellen. Bei der elektrochemischen Störspannung handelt es sich um eine Gleichspannung, die zwischen den Messelektroden anliegt. Diese Stör-Gleichspannung kann bis über 100 mV betragen und ist einige Zehnerpotenzen größer als die auszuwertende durchflussproportionale Messspannung. Zusätzlich überlagern häufig netzfrequente Störspannungen die Messspannung.

Um zwischen der Stör-Gleichspannung und der Signalspannung zu unterscheiden, ist die gezielte zeitabhängige Modulation des Magnetfeldes, also des das Magnetfeld erregenden Stroms, der die Spulen des magnetisch-induktiven Durchflussmessgerätes durchfließt, notwendig.

Bei einer Magnetfeldstärke B=0 ist die Messspannung U gleich Null. Erhöht man den Strom durch die Spulen, steigt die Magnetfeldstärke B und damit auch die Messspannung U entsprechend an. Bei Umkehren des Spulenstroms, also bei invertiertem Magnetfeld B, kehrt U ebenfalls das Vorzeichen um. Dieser Effekt wird eingesetzt, um die Messspannung von der elektrochemischen Stör-Gleichspannung zu diskriminieren.

Von allen Komponenten eines magnetisch-induktiven Durchflussmessgerätes weist die Spulenanordnung zur Erzeugung des den Messstoff durchsetzenden Magnetfeldes B den größten Energiebedarf auf.

Der Erfindung liegt daher die Aufgabe zugrunde, ein energiesparendes Verfahren zum Betreiben eines magnetisch-induktiven Durchflussmessgerätes vorzuschlagen.

Die Aufgabe wird erfindungsgemäß dadurch gelöst, dass das Messrohr von einem mindestens teilweise elektrisch-leitfähigen Messstoff durchströmt wird, wobei zur Bestimmung des Durchflusses mittels mindestens einer Spulenanordnung ein getaktetes Magnetfeld erzeugt wird, welches den Messstoff mindestens teilweise durchdringt, wobei das Magnetfeld durch einen Erregerstrom erzeugt wird, welcher durch die Spulenanordnung fliesst, wobei das Magnetfeld mit mindestens einer ersten Taktung betrieben wird, wobei in dem Fall, dass die Spulenanordnung frei von dem Erregerstrom ist, mittels mindestens einer ersten mit dem Messstoff kommunizierenden Messelektrode eine elektrische Potentialdifferenz zwischen dem Messstoff gegenüber einem Referenzpotential abgegriffen wird, wobei die Potentialdifferenz mit einem vorgegebenen Referenzwert verglichen wird, und wobei in dem Fall einer Abweichung der Potentialdifferenz von dem Referenzwert, welche unter einem vorgegebenen Schwellwert liegt, das Magnetfeld zur Bestimmung des Durchflusses mit mindestens einer, gegenüber der ersten Taktung reduzierten, zweiten Taktung betrieben wird.

Das Magnetfeld des magnetisch-induktiven Durchflussmessgerätes wird im Messbetrieb mit einer ersten Taktung betrieben, d.h. das Magnetfeld wird periodisch durch einen an der Spulenanordnung anliegenden Erregerstrom erzeugt. Dafür kann ein unipolarer Erregerstrom verwendet werden. Alternativ kann die Polarität des Erregerstroms periodisch gewechselt werden. Die Taktung des Magnetfeldes erfolgt bspw. durch im Wesentlichen trapezförmige Spannungs- bzw. Stromimpulse während eines vorgegebenen Zeitintervalls. Während des vorgegebenen Zeitintervalls ist die Spulenanordnung jedoch nicht anhaltend von dem Erregerstrom durchflossen, sondern phasenweise frei von dem Erregerstrom.

Es hat sich gezeigt, dass die Störspannung mit dem Durchfluss, bzw. mit der Durchflussgeschwindigkeit des das Messrohr durchströmenden Messstoffs korreliert. Die während der Phasen, während derer die Spulenanordnung erregerstromfrei ist, abgegriffene Spannung respektive Potentialdifferenz entspricht somit der Störspannung. Diese Spannung kann abgegriffen und ausgewertet und/oder ggf. gespeichert werden. Die Störspannung ergibt sich dabei aus der Potentialdifferenz der ersten Elektrode zu einem Referenzpotential. Das Referenzpotential ist dabei bspw. ein zweites insbesondere konstantes Potential, das es ermöglicht eine Potentialdifferenz zu der ersten Messelektrode zu ermitteln. Nach dem Erfassen der Störspannung, wird diese mit einem Referenzwert verglichen.

Zum Erfassen einer Änderung der Strömungsgeschwindigkeit des Messstoffs bzw. des Durchflusses durch das Messrohr können auch kapazitiv mit dem Messstoff koppelnde Elektroden verwendet werden. Eine Änderung der Durchflussgeschwindigkeit wird dann durch eine Spannungsspitze während der Phase, während derer die Spulenanordnung frei von dem Erregerstrom ist, im Messsignal indiziert.

Die während einer der Phasen der Taktung, während derer die Spulenanordnung frei von dem Erregerstrom ist, abgegriffene Potentialdifferenz wird mit einem Referenzwert verglichen. Bei dem Referenzwert handelt es sich bspw. um einen hinterlegten, insbesondere einen abgespeicherten Wert der Potentialdifferenz. Das Abweichen der Potentialdifferenz von dem Referenzwert, gibt dann Aufschluss über eine Änderung der Potentialdifferenz. Die Abweichung kann bspw. der Betrag der Differenz zw. der abgegriffenen Potentialdifferenz und dem Referenzwert sein. Übersteigt oder unterschreitet die Abweichung einen vorgegebenen Schwellwert, so kann dies als Änderung des Durchflusses bzw. der Durchflussgeschwindigkeit des Messstoffs durch das Messrohr interpretiert werden. Ausgehend von der Information über die Änderung des Durchflusses bzw. der Durchflussgeschwindigkeit des Messstoffs kann eine Anpassung des Magnetfeld-Takts bzw. der Taktung des Magnetfelds erfolgen. Abhängig von der Abweichung wird das magnetisch-induktive Durchflussmessgerät dann mit einer zweiten Taktung betrieben. Infolge dessen werden bspw. pro Zeitintervall abhängig von der ermittelten Abweichung der Potentialdifferenz von dem Referenzwert mehr oder weniger Spannungs- bzw. Strompulse zur Steuerung des Erregerstroms erzeugt, als bei einem Betrieb mit der ersten Taktung.

Durch die an den Durchfluss bzw. die Durchflussänderung angepasste Taktung des Magnetfeldes kann Energie und somit auch Kosten gespart werden. Zudem erhöht sich aufgrund der dadurch erreichten Energieersparnis die Lebensdauer bspw. eines batteriebetriebenen magnetisch-induktiven Durchflussmessgerätes.

In einer Ausgestaltung wird in dem Fall einer Abweichung der Potentialdifferenz von dem Referenzwert, welche über einem vorgegebenen Schwellwert liegt, das Durchflussmessgerät zur Bestimmung des Durchflusses mit mindestens einer, gegenüber der ersten Taktung erhöhten, Taktung betrieben. Der Schwellwert kann bspw. so festgelegt sein, dass nur bei einer gleich bleibenden Potentialdifferenz das Magnetfeld mit der zweiten Taktung betrieben wird. In einem solchen Fall wird jedwede Abweichung der Potentialdifferenz von dem Referenzwert als Überschreiten des Schwellwerts gewertet.

In einer weiteren Ausgestaltung des Verfahrens wird der Referenzwert aus einem, insbesondere hinterlegten, Wert der Potentialdifferenz zwischen der ersten Messelektrode und dem Referenzpotential bestimmt. Dazu wird bspw. ein Wert der Potentialdifferenz abgespeichert und kann somit mit einem Wert der Potentialdifferenz zu einem späteren Zeitpunkt verglichen werden. Dabei wird die Potentialdifferenz abgegriffen, wenn die Spulenanordnung frei von einem Erregerstrom ist. Aufgrund der Änderung der, während erregerstromfreier Phasen der Taktung mit der das Magnetfeld betrieben wird, gemessen Potentialdifferenz, wird dann die Taktung des Magnetfeldes verändert.

In einer weiteren Ausgestaltung wird in dem Fall, dass die Abweichung der Potentialdifferenz von dem Referenzwert den Schwellwert erreicht oder überschreitet, das Magnetfeld mit mindestens einer dritten Taktung zur Bestimmung des Durchflusses betrieben. In dieser Ausgestaltung wird das Magnetfeld, während einer Prozessphase in der sich der Durchfluss nicht oder nur unwesentlich ändert, mit einer zweiten Taktung betrieben. Im Fall einer Änderung der Potentialdifferenz, die über dem vorgegebenen Schwellwert liegt, wird das Magnetfeld dann mit einer dritten Taktung betrieben, um eine Änderung im Durchfluss bzw. in der Durchflussgeschwindigkeit mit erhöhter Genauigkeit und Präzision zu ermitteln.

In einer Ausführungsform des erfindungsgemäßen Verfahrens wird als Magnetfeld ein getaktetes Gleichfeld verwendet. Dies bedeutet, dass das Magnetfeld mittels eines getakteten Gleichstroms erzeugt wird. Dabei wird das Magnetfeld bspw. periodisch umgepolt, so dass an den Messelektroden aufeinander folgende Messspannungen mit umgekehrten Vorzeichen entstehen. Die erfassten Messspannungen werden dann zur Messwertbildung gemittelt. Störspannungen können somit rechnerisch eliminiert werden. Von Vorteil bei einem solchen mit einem getakteten Magnetfeld betriebenen magnetisch-induktiven Durchflussmessgerät ist, dass die Taktung, also die Impulsdichte pro Zeitintervall, mit der das Magnetfeld erzeugt wird, insbesondere bei gleich bleibendem Durchfluss reduziert werden kann. Üblicherweise wird zur Erzeugung eines Magnetfeldimpulses in mindestens einem Kondensator elektrische Energie akkumuliert und entsprechend einer vorgegebenen Taktung ein definierter Stromimpuls in die Spulenanordnung übertragen. Je nach Impulsdichte der vorgegebenen Taktung steht eine kürzere oder längere Zeitspanne zur Verfügung elektrische Energie zu akkumulieren, so dass auch die durch den Erregerstrom erzeugte Magnetfeldstärke abhängig von der verwendeten Taktung sein kann. Von der erzeugten Magnetfeldstärke hängt aber die in dem Messstoff induzierte Messspannung ab. Durch ein stärkeres Magnetfeld, lässt sich daher auch die Messgenauigkeit des Durchflussmessgerätes erhöhen.

In einer weiteren Ausführungsform des Verfahrens wird als Magnetfeld ein Wechselfeld verwendet. Bei der Methode der Wechselfelderregung wird die Spulenanordnung direkt vom Stromnetz durch eine sinusförmige Netzwechselspannung (z.B.: 50 Hz) erregt. Durch das von der Netzwechselspannung erzeugte Magnetfeld können Mess- und Störspannungen gut voneinander getrennt werden. Auch bei einer Erregung des Magnetfelds durch den netzfrequenten Wechselstrom lässt sich der Energiebedarf des Messgerätes mit dem vorgeschlagenen Verfahren reduzieren, da im Vergleich zum im Stand der Technik bekannten Messbetrieb durch das vorgeschlagene Verfahren mit einer geringeren Taktung und somit einem geringeren Energiebedarf gemessen werden kann, ohne dass dabei Änderungen im Durchfluss unberücksichtigt bleiben.

Gemäß einer Ausgestaltung bleibt, im Fall einer Abweichung der Potentialdifferenz von dem Referenzwert, welche unter einem vorgegebenen Schwellwert liegt, die Spulenanordnung frei von einem das Magnetfeld erzeugenden Erregerstrom, bis die Abweichung zwischen der abgegriffenen Potentialdifferenz und dem Referenzwert den vorgegebenen Schwellwert erreicht oder überschreitet. In diesem Fall werden während des Betriebs mit der zweiten Taktung keine Spannungs- bzw. Stromimpulse, um ein Magnetfeld zu erzeugen, an die Spulenanordnung übertragen. Die Spulenanordnung bleibt demzufolge frei von dem Erregerstrom, bis die Abweichung der Potentialdifferenz von dem Referenzwert einen vorgegebenen Schwellwert erreicht oder überschreitet. Durch die vorgeschlagene Ausgestaltung des Verfahrens wird das Magnetfeld nur im Fall einer Abweichung der Potentialdifferenz von dem Referenzwert, welche über einem vorgegebenen Schwellwert liegt, zu Messzwecken erzeugt.

Gemäß einer weiteren Ausgestaltung wird im Fall einer Abweichung der Potentialdifferenz, die über dem vorgegebenen Schwellwert liegt bzw. den Schwellwert überschreitet, das Magnetfeld eingeschaltet und/oder die Abtastrate der ersten, zweiten und/oder dritten Taktung erhöht. Die Taktung des Magnetfelds bzw. der durch die Spulenanordnung fließende Erregerstrom werden bei einer Änderung der Potentialdifferenz, welche über dem Schwellwert liegt erhöht, um eine durch die Abweichung indiziert Änderung des Durchflusses zu ermitteln.

Gemäß einer weiteren Ausgestaltung werden das Magnetfeld und/oder die erste, zweite und/oder dritte Taktung und/oder die Stärke des Magnetfeldes, in Abhängigkeit von der elektrischen Potentialdifferenz oder der Abweichung von dem Referenzwert gesteuert. Mittels einer Erhöhung der Taktung des Magnetfelds können Änderungen im Durchfluss bzw. der Durchflussgeschwindigkeit schneller erfasst werden. Und durch eine Erhöhung der Magnetfeldstärke kann der Durchfluss genauer bestimmt werden. In der vorgeschlagenen Ausgestaltung ist demnach die Stärke und die Taktung des Magnetfeldes von der Abweichung abhängig.

Gemäß einer weiteren Ausgestaltung wird die erste Messelektrode in einem ersten Teilbereich des Messrohrs angebracht, und mittels einer zweiten, insbesondere der ersten Messelektrode im Wesentlichen diametral gegenüberliegenden, in einem zweiten Teilbereich des Messrohrs angebrachten Messelektrode das Referenzpotential ermittelt. Eine weitere Elektrode kann zu Referenz-, Erdungs- und/oder Überwachungszwecken in die Wandung des Messrohrs eingebracht werden. Die Messelektroden können dabei bspw. aus rostfreiem Stahl, Hastelloy ®, Tantal oder Platin/Rhodium bestehen oder mit einem dieser Materialien beschichtet sein. Möglich sind auch kapazitive Flächenelektroden.

Gemäß einer weiteren Ausgestaltung kommt die erste und/oder zweite Messelektrode mit dem Messstoff in Kontakt. Durch die Benetzung der Oberfläche der Messelektroden mit dem Messstoff bilden sich an deren Oberfläche elektrochemische Störpotentiale aus, die einen Rückschluss auf die Durchflussgeschwindigkeit des Messstoffs auch bei abwesendem mittels der Spulenanordnung erzeugten Magnetfelds zulassen. Werden kapazitive Elektroden eingesetzt so macht sich eine Änderung im Durchfluss durch eine durch Induktion übertragene Spannungsspitze im abgegriffenen Messsignal bemerkbar.

Gemäß einer weiteren Ausgestaltung wird ein als Zwei-Leiter-Messgerät ausgestaltetes Durchflussmessgerät verwendet. Vor allem Zwei-Leiter-Messgeräte, die durch ihre Konstruktion bedingt nur über eine geringe Energiezufuhr verfügen, können vorteilhafterweise mit dem erfindungsgemäßen Verfahren betrieben werden.

Gemäß einer weiteren Ausgestaltung wird das Durchflussmessgerät von einer Batterie mit Energie gespeist. Bei einem batteriebetriebenen magnetisch-induktiven Durchflussmessgerät, steht Energie nur in begrenztem Maße und über eine endliche Dauer zur Verfügung, so dass durch das vorgeschlagene Verfahren u.a. die Lebensdauer eines solchen Gerätes verlängert wird.

Die Erfindung wird anhand der nachfolgenden Zeichnungen näher erläutert. Es zeigt:

Fig. 1: eine schematische Darstellung des Messprinzips eines magnetisch-induktiven Durchflussmessgerätes,

Fig. 2: einen Verlauf der Potentialdifferenz bei einem mit einem getakteten Magnetfeld betriebenen magnetisch-induktiven Durchflussmessgerät,

Fig. 3: einen Verlauf der Potentialdifferenz, bei einem mit einem Vollfeld betriebenen magnetisch-induktiven Durchflussmessgerät, und

Fig. 4: einen Verlauf der Potentialdifferenz bei einem Halbfeld pro Messung.

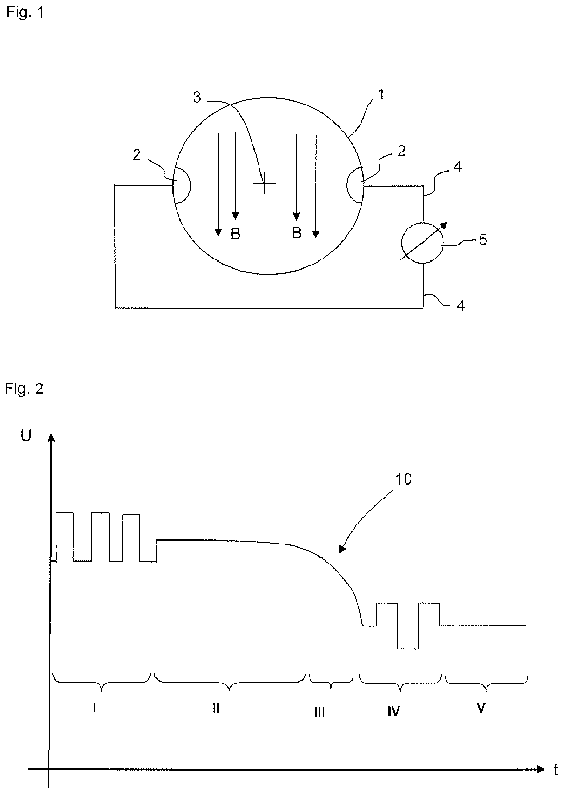

Figur 1 zeigt in einer schematischen Darstellung die Funktionsweise eines magnetisch-induktiven Durchflussmessgerätes. Senkrecht zur Längsachse 3 des Messrohrs 1 durchdringt ein Magnetfeld B, angedeutet durch die im Messrohr verlaufenden Pfeile, das Messrohr 1 und den darin strömenden elektrisch leitfähigen Messstoff. Das Magnetfeld B wird dabei von wenigstens einer Spulenanordnung, nicht gezeigt, erzeugt. Ebenfalls senkrecht zur Längsachse 3 des Messrohrs 1 und zu den eingezeichneten Magnetfeldlinien sind zwei sich diametral gegenüberliegende Messelektroden 2 in das Messrohr 1 eingebracht. Dabei stehen die Messelektroden 1 mit dem Messstoff in Kontakt. Entsprechend dem Induktionsgesetz wird durch das Magnetfeld B im Messstoff eine Messspannung $U_{flow}$ induziert, die der mittleren Geschwindigkeit v, mit der der Messstoff das Messrohr 1 mit dem Durchmesser d durchströmt, proportional ist. Es gilt annähernd: $U_{flow} = k\ B\ d\ v$.

Zwischen den Messelektroden 2 und dem Messstoff bildet sich eine elektrochemische Störspannung aus. Die Störspannung kann bis zu 100 mV betragen. Die zwischen den Messelektroden 2 bestehende Potentialdifferenz U ändert sich in Abhängigkeit von der Strömungsgeschwindigkeit. Die Ursache dafür liegt in der von der Strömungsgeschwindigkeit abhängigen Abrasion bzw. den von der Strömungsgeschwindigkeit abhängigen Ablagerungen an den Messelektroden 2. Bei einem Wechsel der Strömungsgeschwindigkeit ändert sich daher auch das elektrische Potential an den Messelektroden 2, bzw. zwischen der ersten Messelektrode und dem Referenzpotential. Zum ermitteln der zwischen den Messelektroden 2 bestehenden Potentialdifferenz U wird ein Spannungsmesser 5 bspw. in Form eines entsprechend geschalteten Operationsverstärkers verwendet. Die elektrische Potentialdifferenz U zwischen den Messelektroden 2 kann insbesondere während abwesendem, von der Spulenanordnung erzeugtem, Magnetfeld B abgegriffen werden. Der Spannungsmesser 5 ist dafür über elektrische Verbindungsleitungen 4 mit den Messelektroden 2 verbunden. Weiterhin können Änderungen der elektrischen Potentialdifferenz U durch Störeffekte wie bspw. in das Messsignal einkoppelnde Störspannungen, Ablagerungen und im Messstoff mitgeführte Partikel und/oder Gase verursacht sein. Zum diskriminieren dieser unterschiedlichen das Messsignal beeinflussenden Effekte lässt sich bspw. das in der Druckschrift DE 103 295 40 A1 bekannt geworden Verfahren verwenden.

Figur 2 zeigt den idealisierten zeitlichen Verlauf der Potentialdifferenz U. Die gezeigte Potentialdifferenz U kann zwischen der ersten Messelektrode 2 und einem Referenzpotential, insbesondere einer zweiten Messelektrode 2 abgegriffen werden. Während des ersten Abschnitts I wird der strömende Messstoff mit einem getakteten Magnetfeld B, nicht gezeigt, beaufschlagt. Korrespondierend zu der Taktung des Magnetfeldes B wird in dem Messstoff entsprechend dem Induktionsgesetz eine Spannung induziert. Im ersten Abschnitt I ist der im Wesentlichen rechteckige, mäandrierende Verlauf der induzierten Spannung zu erkennen. Die rechteckige Verlaufsform ergibt sich durch die Änderung der Polarität der induzierten Spannung $U_{flow}$. Die induzierte Spannung $U_{flow}$ superponiert dabei die elektrochemische Störspannung. Bei der elektrochemischen Störspannung handelt es sich um eine Gleichspannung. Während der Phasen, während denen der Messstoff nicht mit dem von der Spulenanordnung erzeugten Magnetfeld beaufschlagt wird, entspricht die Potentialdifferenz U zwischen den Messelektroden 2 im Wesentlichen der elektrochemischen Störspannung. In Abschnitt I sind zweieinhalb Messphasen zu erkennen, während derer zur Bestimmung des Durchflusses durch das Messrohr 1 eine elektrische Spannung $U_{flow}$ in dem Messstoff induziert wird. Die im Messstoff induzierte Spannung $U_{flow}$ und folglich der Durchfluss durch das Messrohr 1 bleibt in Abschnitt I konstant. Das Magnetfeld B zur Bestimmung des Durchflusses wird nun ausgeschaltet. In dem Abschnitt II bleibt die Potentialdifferenz U bei ausgeschaltetem Magnetfeld B konstant. Während des Abschnitts II ist auch ein Betrieb des Durchflussmessgerätes mit einer reduzierten zweiten Taktung, nicht gezeigt, möglich. Im Abschnitt III erfolgt eine Änderung 10 der Potentialdifferenz U, woraufhin im Abschnitt IV das Magnetfeld B wieder eingeschaltet und mit einer dritten Taktung betrieben wird. Nach zwei Messperioden mit der dritten Taktung wird das Magnetfeld B wieder ausgeschaltet. Während des Abschnitts V bleibt die Potentialdifferenz U bei neuerlich ausgeschaltetem Magnetfeld konstant.

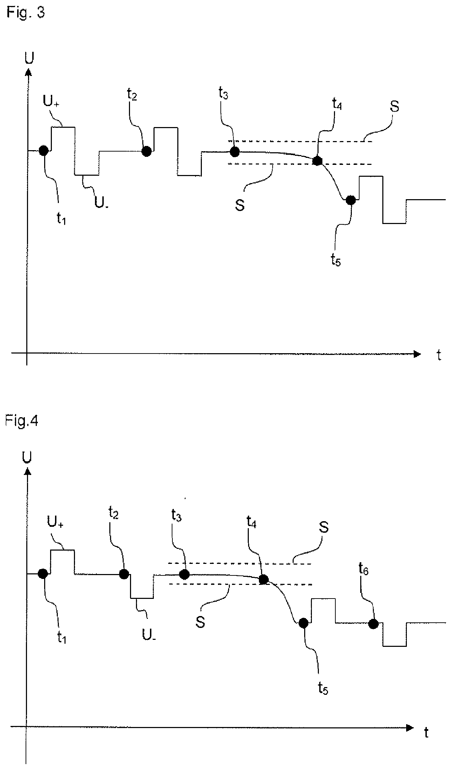

Figur 3 zeigt den Verlauf der Potentialdifferenz, bei getaktetem Magnetfeld B, wobei die Polarität des Magnetfelds B während einer Messperiode umgekehrt wird. Während einer zur Bestimmung der durch das Magnetfeld B im Messstoff induzierten Spannung $U_{flow}$ ändert sich die Polarität der Potentialdifferenz abhängig von der Polarität des Magnetfelds B. Das Magnetfeld B wird periodisch umgepolt, so dass an den Messelektroden 2 zwei aufeinander folgende Messspannungen $U_+$, $U_-$ mit umgekehrten Vorzeichen entstehen. Die aus beiden Messwerten gemittelte Differenz entspricht der induzierten Spannung $U_{flow}$, wobei gilt $U_{flow} = \dfrac{U_+ - U_-}{2}$. Dabei sind, zwischen den Phasen der Taktung in denen ein Magnetfeld zur Bestimmung des Durchflusses erzeugt wird, magnetfeldfreie Phasen vorgesehen. Vor einer Messung wird zur Bestimmung der elektrochemischen Störspannung die Potentialdifferenz U abgegriffen. Zu diesen Zeitpunkten $t_1$, $t_2$, $t_5$ ist die Spulenanordnung frei von dem das Magnetfeld B erzeugenden Erregerstrom. Bleibt die ermittelte Potentialdifferenz U unterhalb des vorgegebenen Schwellwertes S und die in dem Messstoff induzierte Spannung $U_+$, $U_-$ im Wesentlichen gleich, so kann das Magnetfeld B abgeschaltet und zum Zwecke der Durchflussbestimmung nur noch die elektrochemische Störspannung überwacht werden. Zum Zeitpunkt $t_4$ der vierten Messung ist die Abweichung der Potentialdifferenz U von dem Referenzwert noch unterhalb des Schwellwertes S und es erfolgt keine aktive Messung des Durchflusses durch Erzeugen eines den Messstoff durchdringenden Magnetfeldes. Zum Zeitpunkt $t_5$ überschreitet die Abweichung den vorgegebenen Schwellwert S und es wird ein Magnetfeld B mit einer dritten Taktung erzeugt.

In Figur 4 wird die Messung des Durchflusses mittels eines sog. Halbfelds durchgeführt. Dafür wird im Gegensatz zur Messung mit Vollfeld, bei der die Polarität des Magnetfeldes B unmittelbar umgekehrt wird, während einer Messung die Polarität des Magnetfeldes B beibehalten und erst in der darauf folgenden Messung umgekehrt. Ein Messwert wird dabei nach wenigstens zwei Messungen durch Mittelung der während der Messungen induzierten Spannung $U_{flow}$ bestimmt. Dabei wird vor einer Induktion des Magnetfeldes durch den Erregerstrom die Potentialdifferenz U zu den Zeitpunkten $t_1$, $t_2$, $t_3$, $t_4$, $t_5$, $t_6$ gemessen, um festzustellen ob eine Änderung im Durchfluss stattgefunden hat. Abhängig von dieser gemessenen Potentialdifferenz U wird dann ein Magnetfeld B erzeugt und gegebenenfalls die Taktung reduziert. Bei dem in Figur 4 gezeigten Potentialverlauf bleibt das Magnetfeld B, nachdem zum Zeitpunkt $t_3$ eine unveränderte Potentialdifferenz U gegenüber dem Zeitpunkt $t_1$ und/oder $t_2$ festgestellt wurde, ausgeschaltet, bis unmittelbar nachdem Zeitpunkt $t_5$, zu dem festgestellt wurde, dass die Potentialdifferenz U den Schwellwert S überschritten hat.

### Bezugszeichenliste

| | |
|---|---|
| 1 | Messrohr |
| 2 | Messelektrode |
| 3 | Längsachse des Messrohrs |
| 4 | Elektrische Verbindungsleitungen |
| 5 | Spannungsmesser |
| 10 | Potentialänderung |
| S | Schwellwert |
| t | Zeit |
| t1 | Erregerstromfreier (Mess-)Zeitpunkt |
| t2 | Erregerstromfreier (Mess-)Zeitpunkt |
| t3 | Erregerstromfreier (Mess-)Zeitpunkt |
| t4 | Erregerstromfreier (Mess-)Zeitpunkt |
| t5 | Erregerstromfreier (Mess-)Zeitpunkt |
| t6 | Erregerstromfreier (Mess-)Zeitpunkt |
| U | Potentialdifferenz |
| U+ | Induzierte Spannung |
| U- | Induzierte Spannung umgekehrter Polarität |

### Patentansprüche

1. Verfahren zum Betreiben eines magnetisch-induktiven Durchflussmessgerätes mit einem Messrohr (1),

- wobei das Messrohr (1) von einem mindestens teilweise elektrisch-leitfähigen Messstoff durchströmt wird,
- wobei zur Bestimmung des Durchflusses mittels mindestens einer Spulenanordnung ein getaktetes Magnetfeld (B) erzeugt wird,

-- welches den Messstoff mindestens teilweise durchdringt,
-- wobei das Magnetfeld (B) durch einen Erregerstrom erzeugt wird,
--- welcher durch die Spulenanordnung fliesst,

-- wobei das Magnetfeld (B) mit mindestens einer ersten Taktung betrieben wird,

- wobei in dem Fall, dass die Spulenanordnung frei von dem Erregerstrom ist, mittels mindestens einer ersten mit dem Messstoff kommunizierenden Messelektrode (2) eine elektrische Potentialdifferenz (U) zwischen dem Messstoff gegenüber einem Referenzpotential abgegriffen wird,

-- wobei die Potentialdifferenz (U) mit einem vorgegebenen Referenzwert verglichen wird, und
--- wobei in dem Fall einer Abweichung der Potentialdifferenz (U) von dem Referenzwert, welche unter einem vorgegebenen Schwellwert (S) liegt, das Magnetfeld (B) zur Bestimmung des Durchflusses mit mindestens einer gegenüber der ersten Taktung reduzierten zweiten Taktung betrieben wird.

2. Verfahren nach Anspruch 1,
wobei der Referenzwert aus einem, insbesondere hinterlegten, Wert der Potentialdifferenz (U) zwischen der ersten Messelektrode (2) und dem Referenzpotential bestimmt wird.

3. Verfahren nach einem der vorherigen Ansprüche,
wobei in dem Fall, dass die Abweichung der Potentialdifferenz (U) von dem Referenzwert den Schwellwert (S) erreicht oder überschreitet, das Magnetfeld (B) mit mindestens einer dritten Taktung zur Bestimmung des Durchflusses betrieben wird,

4. Verfahren nach einem der vorherigen Ansprüche,
wobei als Magnetfeld (B) ein getaktetes Gleichfeld verwendet wird.

5. Verfahren nach einem der vorherigen Ansprüche,
wobei als Magnetfeld (B) ein Wechselfeld verwendet wird.

6. Verfahren nach einem der vorherigen Ansprüche,
wobei im Fall einer Abweichung der Potentialdifferenz (U) von dem Referenzwert, welche unter einem vorgegebenen Schwellwert (S) liegt, die Spulenanordnung frei von einem das Magnetfeld (B) erzeugenden Erregerstrom bleibt,
bis die Abweichung zwischen der abgegriffene Potentialdifferenz (U) und dem Referenzwert den vorgegebenen Schwellwert (S) erreicht oder überschreitet.

7. Verfahren nach einem der vorherigen Ansprüche,
wobei im Fall einer Abweichung der Potentialdifferenz (U), die über dem vorgegebenen Schwellwert (S) liegt das Magnetfeld (B) eingeschaltet wird und/oder die Abtastrate der ersten, zweiten und/oder dritten Taktung erhöht wird.

8. Verfahren nach einem der vorherigen Ansprüche,
wobei das Magnetfeld (B) und/oder die erste, zweite und/oder dritte Taktung und/oder die Stärke des Magnetfeldes (B),
in Abhängigkeit von der elektrischen Potentialdifferenz (U) oder der Abweichung von dem Referenzwert gesteuert wird.

9. Verfahren nach einem der vorherigen Ansprüche,
wobei die erste Messelektrode (2) in einem ersten Teilbereich des Messrohrs (1) angebracht wird, und dass mittels einer zweiten, insbesondere der ersten Messelektrode (2) im Wesentlichen diametral gegenüberliegenden, in einem zweiten Teilbereich des Messrohrs (1) angebrachten Messelektrode (2) das Referenzpotential ermittelt wird.

10. Verfahren nach einem der vorherigen Ansprüche,
wobei die erste und/oder zweite Messelektrode (2)mit dem Messstoff in Kontakt kommt.

11. Verfahren nach einem der vorherigen Ansprüche,
wobei ein als Zwei-Leiter-Messgerät ausgestaltetes Durchflussmessgerät verwendet wird.

12. Verfahren nach einem der vorherigen Ansprüche,
wobei das Durchflussmessgerät von einer Batterie mit Energie gespeist wird.

**Claims**

1. Procedure for operating an electromagnetic flowmeter with a measuring tube (1),

- wherein a medium, which is at least partially electrically conductive, flows through the measuring tube (1),
- wherein, in order to determine the flow, a clocked magnetic field (B) is generated using at least one coil arrangement,

-- said magnetic field at least partially passing through the medium
-- wherein the magnetic field (B) is generated by an excitation current,
--- wherein said current flows through the coil arrangement,
-- wherein the magnetic field (B) is operated with at least a first clock system,

- wherein, in the event that the coil arrangement is free from the excitation current, an electrical potential difference (U) between the medium in relation to a reference potential is measured using at least a first measuring electrode (2) that communicates with the medium,

-- wherein the potential difference (U) is compared with a predefined reference value, and

--- wherein, in the event of a deviation of the potential difference (U) from the reference value which is less than a predefined threshold value (S), the magnetic field (B) for determining the flow is operated with at least a second clocking system which is reduced in relation to the first clocking system.

2. Procedure as claimed in Claim 1, wherein the reference value is determined from a value, particularly a stored value, of the potential difference (U) between the first measuring electrode (2) and the reference potential.

3. Procedure as claimed in one of the previous claims, wherein, in the event that the deviation of the potential difference (U) from the reference value reaches or exceeds the threshold value (S), the magnetic field (B) is operated with at least a third clocking system to determine the flow.

4. Procedure as claimed in one of the previous claims, wherein a clocked DC field is used as the magnetic field (B).

5. Procedure as claimed in one of the previous claims, wherein a clocked AC field is used as the magnetic field (B).

6. Procedure as claimed in one of the previous claims, wherein, in the event of a deviation of the potential difference (U) from the reference value which is below a predefined threshold value (S), the coil arrangement remains free from an excitation current that generates the magnetic field (B) until the deviation between the measured potential difference (U) and the reference value reaches or exceeds the defined threshold value (S).

7. Procedure as claimed in one of the previous claims, wherein, in the event of a deviation of the potential difference (U) which is above the predefined threshold value (S), the magnetic field (B) is switched on and/or the sampling rate of the first, second and/or third clocking system is increased.

8. Procedure as claimed in one of the previous claims, wherein the magnetic field (B) and/or the first, second and/or third clocking system and/or the strength of the magnetic field (B) is controlled depending on the electrical potential difference (U) or on the deviation from the reference value.

9. Procedure as claimed in one of the previous claims, wherein the first measuring electrode (2) is attached in a first section of the measuring tube (1), and wherein the reference potential is determined using a second measuring electrode (2), particularly one that is essentially diametrically opposite to the first measuring electrode (2), which is attached in a second section of the measuring tube (1).

10. Procedure as claimed in one of the previous claims, wherein the first and/or the second measuring electrode (2) comes into contact with the medium.

11. Procedure as claimed in one of the previous claims, wherein a flowmeter designed as a two-wire measuring device is used.

12. Procedure as claimed in one of the previous claims, wherein the flowmeter is supplied with energy from a battery.

**Revendications**

1. Procédé destiné à l'exploitation d'un débitmètre magnéto-inductif avec un tube de mesure (1),

- pour lequel le tube de mesure (1) est parcouru par un produit au moins partiellement électroconducteur,
- pour lequel un champ magnétique cadencé (B) est généré pour la détermination du débit au moyen d'au moins un ensemble de bobines,

-- lequel champ traverse au moins partiellement le produit
-- le champ magnétique (B) étant généré par un courant d'excitation,
--- lequel courant circule à travers l'ensemble de bobines,
-- le champ magnétique (B) étant utilisé avec au moins une première synchronisation,

- pour lequel dans le cas où l'ensemble de bobines est dépourvu de courant d'excitation, une différence de potentiel électrique (U) entre le produit par rapport à un potentiel de référence est prélevée au moyen d'au moins une électrode de mesure (2) communiquant avec le produit,

-- pour lequel la différence de potentiel (U) est comparée avec une valeur de référence prédéfinie, et
--- pour lequel, dans le cas d'un écart de la différence de potentiel (U) par rapport à la valeur de référence, lequel écart est inférieur à un seuil (S) prédéfini, le champ magnétique (B) destiné à la détermination du débit est utilisé avec au moins une deuxième synchronisation réduite par rapport à la première synchronisation.

2. Procédé selon la revendication 1, pour lequel la valeur de référence est déterminée à partir d'une valeur, notamment mémorisée, de la différence de potentiel (U) entre la première électrode de mesure (2) et le potentiel de référence.

3. Procédé selon l'une des revendications précédentes, pour lequel dans le cas où l'écart de la différence de potentiel (U) par rapport à la valeur de référence atteint ou dépasse le seuil (S), le champ magnétique (B) est utilisé avec au moins une troisième synchronisation pour la détermination du débit.

4. Procédé selon l'une des revendications précédentes, pour lequel un champ continu synchronisé est utilisé comme champ magnétique (B).

5. Procédé selon l'une des revendications précédentes, pour lequel un champ alternatif est utilisé comme champ magnétique (B).

6. Procédé selon l'une des revendications précédentes, pour lequel dans le cas d'un écart de la différence de potentiel (U) par rapport à la valeur de référence, lequel écart est inférieur à un seuil (S) prédéfinissable, l'ensemble de bobines reste dépourvu d'un courant d'excitation générant le champ magnétique (B), jusqu'à ce que l'écart entre la différence de potentiel (U) prélevée et la valeur de référence atteint ou dépasse le seuil (S) prédéfini.

7. Procédé selon l'une des revendications précédentes, pour lequel dans le cas d'un écart de la différence de potentiel (U) supérieur au seuil (S) prédéfini, le champ magnétique (B) est activé et/ou la fréquence d'échantillonnage de la première, la deuxième et/ou la troisième synchronisation est augmentée.

8. Procédé selon l'une des revendications précédentes, pour lequel le champ magnétique (B) et/ou la première, la deuxième et/ou la troisième synchronisation et/ou l'intensité du champ magnétique (B) sont commandés en fonction de la différence de potentiel électrique (U) ou de l'écart par rapport à la valeur de référence.

9. Procédé selon l'une des revendications précédentes, pour lequel la première électrode de mesure (2) est disposée dans une première zone partielle du tube de mesure (1), et pour lequel le potentiel de référence est déterminé au moyen d'une deuxième électrode de mesure (2), notamment pour l'essentiel diamétralement opposée à la première électrode de mesure (2), laquelle deuxième électrode de mesure (2) est disposée dans une deuxième zone partielle du tube de mesure (1).

10. Procédé selon l'une des revendications précédentes, pour lequel la première et/ou la deuxième électrode de mesure (2) entre en contact avec le produit.

11. Procédé selon l'une des revendications précédentes, pour lequel est utilisé un débitmètre conçu en tant qu'appareil de mesure bifilaire.

12. Procédé selon l'une des revendications précédentes, pour lequel le débitmètre est alimenté en énergie au moyen d'une batterie.

Fig. 1

Fig. 2

Fig. 3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP S58135915 A
- DE 10329540 A1